# EUROPEAN PATENT SPECIFICATION

(11) **EP 3 108 209 B1**
(45) Date of publication and mention of the grant of the patent: **08.04.2020**
(21) Application number: 15751752.5
(22) Date of filing: 05.02.2015
(51) Int. Cl.: G01C 21/32, B60W 40/076

(54) **MAP BUILDING IN A VEHICLE**
KARTENERSTELLUNG IN EINEM FAHRZEUG
CONSTRUCTION DE CARTE DANS UN VÉHICULE

(30) Priority: 18.02.2014 SE 1450185
(43) Date of publication of application: 28.12.2016
(73) Proprietor: Scania CV AB, 151 87 Södertälje (SE)
(72) Inventor: JOHANSSON, Björn, S-125 31 Älvsjö (SE); SAHLHOLM, Per, S-141 45 Huddinge (SE)
(74) Representative: Scania CV AB
(86) International application number: PCT/SE2015/050125
(87) International publication number: WO 2015/126309

(56) References cited:
- EP-A2- 0 752 548
- EP-A2- 1 045 224
- EP-A2- 1 530 025
- WO-A1-2010/144029
- WO-A1-2012/085973
- DE-A1-102010 042 065
- FR-A1- 2 811 271
- FR-A3- 2 881 545
- US-A1- 2004 068 364
- US-A1- 2013 131 974
- US-A1- 2014 277 971

## Description

### TECHNICAL FIELD OF THE INVENTION

This document specifies a method and a calculating unit for building and using a database to enable prediction of a route of travel for a vehicle, based on the map built.

### BACKGROUND

When driving a vehicle there are a plurality of advantages in being able to predict what the route of travel looks like, e.g. if a better choice of gear could be made if the vehicle has an automatic transmission or an automated manual transmission (AMT). For example, fuel can be saved and drivability improved in this way.

"Vehicle" refers in this context to, for example, a goods vehicle, long-haul semi, pick-up truck, van, wheel loader, bus, motorcycle, terrain vehicle, tracked vehicle, snowmobile, tank, ATV, tractor, passenger car or other similar motorized manned or unmanned mode of transport adapted for land-based geographic movement.

When shifting gears in a vehicle, the vehicle driveline is in a torque-less state during the shift. The vehicle is thus not being propelled by the engine during the time when the shift is being completed, but rather rolls further in the direction of travel as a result of inertia. In, for example, an AMT transmission, there are often three parts, i.e. split gear, main transmission and range gear, which interwork with one another. During shifting the main gear is put into neutral, then the split and/or range gear is/are shifted from high to low or vice versa. The new gear in the main transmission can then be engaged. This causes the shifting process to take time, and the vehicle velocity consequently decreases during the shifting process.

This can make it difficult for the vehicle and its driver, e.g. when the transmission is shifting up to a higher gear as the vehicle is driving on a straight section just before a steep uphill stretch begins. If the transmission tries to upshift, the rpm of the new higher gear may be tool low, due to the reduced vehicle velocity, which in turn causes the engine to generate such low torque that the vehicle cannot cope and the engine then stalls; alternatively, the transmission immediately downshifts, which leads to another torque-less state and thus to a further reduction in vehicle velocity.

One way to avoid this is to use cartographic data comprising slope information, determine the vehicle position and direction of travel by means of, e.g. GPS, predict the route of travel and future slope conditions and, for example, suppress an upshift to a higher gear if an uphill stretch is predicted; or perform a downshift immediately before the uphill section begins.

One problem with this is that cartographic data with slope information is not always available, e.g. away from major highways or in terrain off the road system. Difficult driving conditions often prevail here, such as when driving in a mine, where heavy loads and uphill stretches often occur in combination with substandard roads that limit velocity, or no given road at all. The conditions can be similar in connection with, for example, a building, construction site or when driving a timber truck on clear-cut or rutted gravel roads in the forest, or when driving across terrain in a terrain vehicle.

It may also be that the surroundings are constantly changing, e.g. in an open-pit mine, with the result that stored cartographic data quickly become outdated, even if they are available. A prediction that is wrong and leads to an erroneous shifting of gears is often worse than no prediction at all, with the result that the driver in such situations often chooses to drive using a manual transmission, if such a changeover is possible in vehicle.

Sometimes there is no given route of travel between two points, or a plurality of alternative routes of travel. One example of this can be that there may be one short and straight but steep road up a rise, and one long, winding but less steep road. In such cases the gear-shifting conditions are completely different. Even if one has access to cartographic data with slope information, it is of very little help from a gear-shifting standpoint if one does not know which alternative road the vehicle and its driver will be taking.

US6847887 describes a system for gathering navigation data, wherein the load on the engine is used as a parameter. Pressure measurements made by means of a barometer are used in the system to determine altitude and slope. This system pertains only to driving on roads, and does not pertain to changes in them. Nor does it make any prediction as to a route of travel if multiple alternatives are present.

WO2010147730 describes a method for generating navigation data in a transport network. The method is based on measuring and statistically analyzing which routes of travel different vehicles take, based on a plurality of different vehicle parameters. There is no mention of how a database for a landscape is built.

EP921509 describes a method for updating and refining cartographic and geographic data by equipping a plurality of vehicles with sensors and analyzing the results statistically. The sensors can read a plurality of relevant parameters, and a program can then analyze and compare the results against current geographic data and update them. Cartographic data can thereby gradually be updated as the road changes. This method does not address how a map could be built in a road-free landscape, or the prediction of routes of travel to facilitate appropriate gear choices.

WO2009133185 describes a system for the iterative generation of a digital map by means of sensors that read the topography and store data in a memory. This system does not address the issue of determining a direction of travel or predicting a route of travel for a vehicle. Nor does it discuss the issue of how the built map can be used to control functions in the vehicle, such as gear shifting.

GB2428852 describes, among other things, a method for map building for distribution vehicles, wherein a map of the differences between different routes of travel is drawn up. The document contains nothing about topographic differences between different routes of travel, and even less how the stored map could be used to control functions in the vehicle, such as gear shifting.

EP1045224 describes a method for updating a digital map based on measurement data from probe vehicles, including topographic data.

WO2012085973 describes a method and device for accumulating travel information into a travel history database, and for selecting map information corresponding to a predicted travel path.

It is clear that a great deal remains to be done to improve route-of-travel prediction for a vehicle, particularly in areas where roads are lacking, where the landscape is changing rapidly, where cartographic data are lacking, or where cartographic data quickly become outdated.

### SUMMARY

It is consequently an object of this invention to solve at least one of the foregoing problems and achieve improved route-of-travel prediction for a vehicle.

According to a first aspect of the invention, this object is achieved by means of a method for building a database to enable route-of-travel prediction for a vehicle, as defined in claim 1.

storing, in the database, the measured location-dependent parameter in association with the determined direction of travel and the determined geographic position of the vehicle.

According to another aspect of the invention, this object is achieved by means of a calculating unit arranged so as to build a database to enable prediction of a route of travel for a vehicle, as defined in claim 7.

Measuring and storing location-related data and associating them with a respective geographic position and building up statistics regarding various incoming directions and outgoing directions to and from each respective position makes it possible, knowing the direction from which one is coming and the current position, to predict which route of travel is the most likely one for the vehicle in question to take, based on the frequency of previously made route-of-travel choices. This makes it possible to predict a route of travel for a vehicle, even in an area where road data are lacking and/or where roads are even absent. Furthermore, certain embodiments make it possible to predict a route of travel even in an environment that is changing rapidly or in an unpredictable way, such as an open-pit mine, a construction site or a logging area. Improved route-of-travel prediction for a vehicle is hereby achieved.

Other advantages and additional novel features will be presented in the detailed description below.

### LIST OF FIGURES

Embodiments of the invention will now be described in greater detail with reference to the accompanying figures, which illustrate different exemplary embodiments:
- **Figure 1**: illustrates a vehicle according to one embodiment.
- **Figure 2A**: illustrates a representation of a landscape according to one embodiment.
- **Figure 2B**: illustrates an example of directional statistics for a position in the representation of the landscape according to one embodiment.
- **Figure 2C**: clarifies an example of topographic differences at various locations in the landscape.
- **Figure 2D**: shows an example of data stored in association with a given position.
- **Figure 2E**: shows an example of a route-of-travel prediction.
- **Figure 3A**: illustrates an example of a driver environment in a vehicle arranged according to one embodiment of the method.
- **Figure 3B**: illustrates an example of a clarification of the predicted driving conditions according to one embodiment.
- **Figure 4**: is a flow diagram that illustrates one embodiment of the invention.
- **Figure 5**: is an illustration of a calculating unit according to one embodiment of the invention.
- **Figure 6**: is a flow diagram that illustrates an example not forming part of the claimed invention.

### DETAILED DESCRIPTION

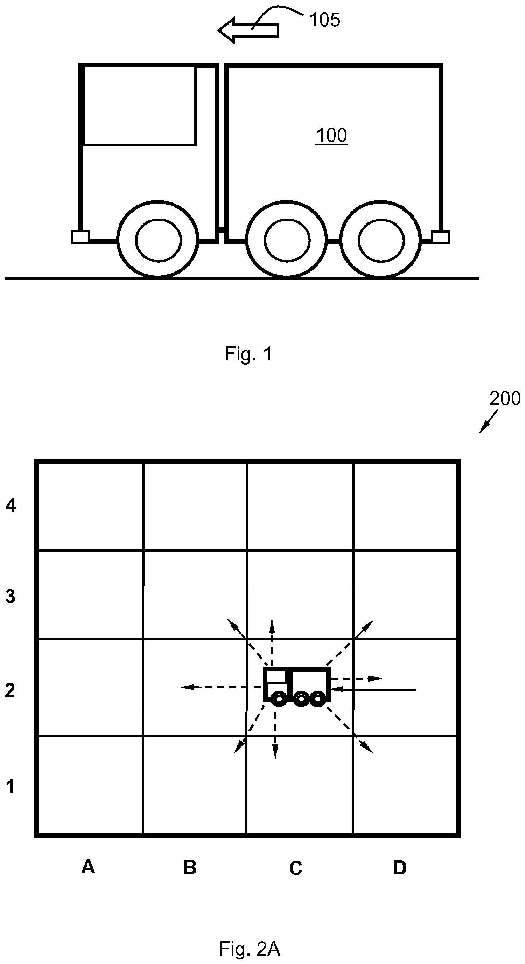

**Figure 1** shows a vehicle **100** adapted for motorized propulsion in, among others, a first direction of travel **105.** The vehicle 100 can, for example, but not necessarily, be a goods vehicle, a bus or consist of any of the vehicles types enumerated above, or a similar land-based means of conveyance. The vehicle 100 can also, for example, but not necessarily, be specially adapted for all-terrain operation, or arranged for mobility under severe driving conditions comprising major topographic variations, irregular underlying surfaces and/or underlying surfaces of varying friction.

According to one embodiment, the vehicle 100 can be arranged so as to gather location-dependent data such as position, elevation and/or slope from transmitters in the vehicle, such as a GPS, accelerometer and/or pressure sensor. The gathered data are then used to generate an elevation and/or slope map of the terrain. Sometimes there are no given roads through the terrain. According to one embodiment, a stretch of road can be estimated and predicted by building a statistical database. To predict the road slope or elevation difference ahead on the road, the most likely road forward can be predicted, and a road slope or elevation difference associated with a point along the most likely road forward can be used as a basis for, for example, shifting gears.

In certain embodiments, additional parameters such as vehicle weight, vehicle type, vehicle, time, season, precipitation conditions, temperature etc can also be included in the statistical database to further enable the provision of a good prediction for driveline control.

It can thereby become possible to predict, for example, whether the vehicle 100 often turns left at a certain point when it is fully loaded, and turns right when it has no load.

**Figure 2A** shows an example of a representation of a landscape. In certain embodiments the vehicle 10 can initially have a blank two-dimensional working map **200** in a memory, for example, containing longitude and latitude. Each point on said working map 200 can correspond to a section of the landscape in which the vehicle 100 is located. Such a section can measure, for example 10 x 10 meters, or an alternative multiple fraction of this size. According to certain embodiments, the working map 200 can be matrix-based, wherein each matrix element corresponds to a two-dimensional section of the landscape. In certain embodiments, the working map 200 can be vector-based, or comprise a mixture of vectors and matrix elements. For example, vector elements can be used in sections where there is only one conceivable, or most likely, route of travel. Such a route of travel can consist of a proper route of travel that is used as a transport route of travel to the work area, for example, or in a landscape where the natural conditions enable travel only along one feasible route of travel through a given portion of the landscape that corresponds to the working map 200.

In the example shown in Figure 2A, the vehicle 100 is in a section of terrain corresponding to position C2 on the working map 200 in the memory. The incoming direction is indicated by a solid arrow, in this case from position D2. The various conceivable outgoing directions from position C2 are indicated by broken arrows and comprise D1, D2, D3, C1, C3, B1, B2 and/or B3 in the illustrated example.

Statistics for each section can then be read for various location-dependent variables, such as elevation, from a GPS, pressure sensor, barometer, altimeter or other type of elevation meter, or obtained via a combination of values read from a plurality of such topological instruments. Statistics pertaining to the slope in each section can also, or alternatively, be obtained. Such a slope can be detected by means of an accelerometer, leveling instrument or another slope sensor, e.g. based on a spirit level. Rolling resistance can also be measured and stored in certain alternative embodiments. This makes it possible to detect the type of underlying surface, such as gravel or asphalt. Furthermore, in some forms the time for data storage or updating, so that data can, for example, be culled after a given period of time. In certain embodiments the stored time can be used to filter a selection of statistics.

Furthermore, said statistics can include an outgoing direction from a given section as a function of the incoming direction to the position plus, optionally, the vehicle weight, vehicle type, vehicle identification, vehicle driver, vehicle owner or any other similar vehicle-related parameter. An outgoing direction can also pertain to the next or a later section of the route of travel.

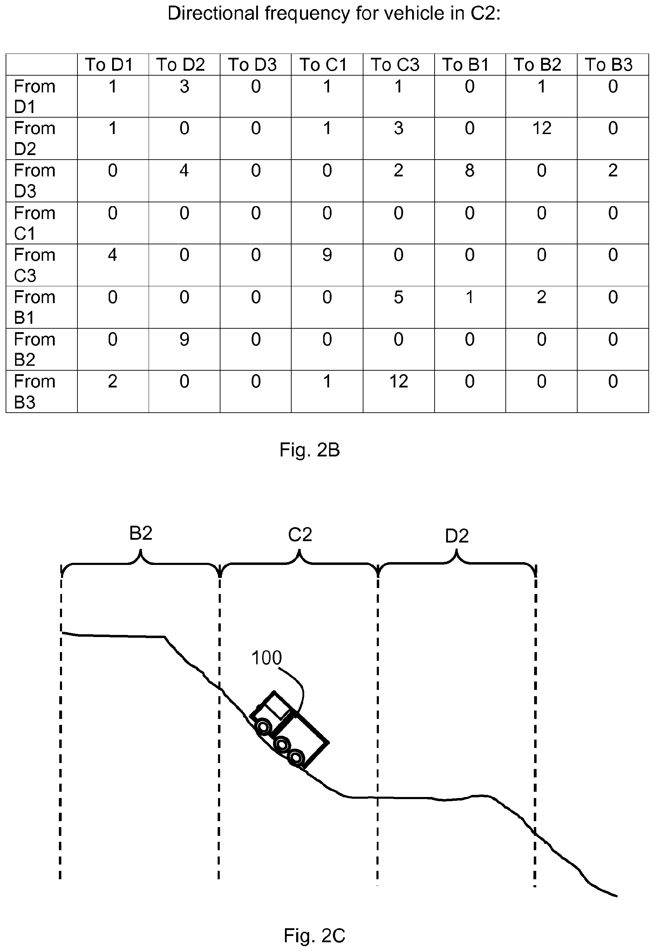

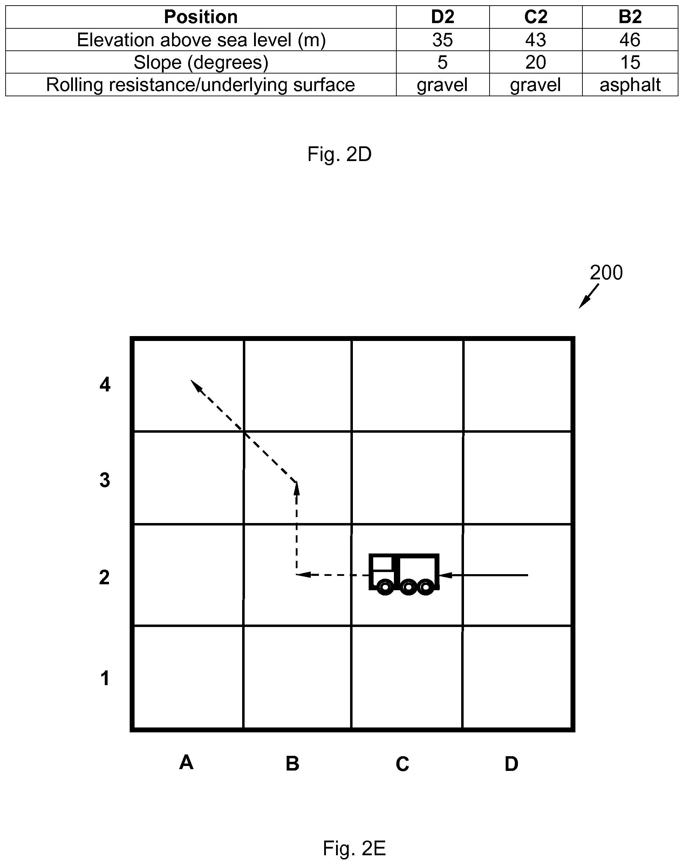

**Figure 2B** shows an example of statistics pertaining to the directional frequency for a vehicle 100 that is driving through C2. Knowing the direction from which the vehicle 100 is coming, it is possible to predict, based on frequency, which future route of travel is most likely; in this case when the vehicle 100 is coming from D2, the most likely result is that the vehicle 100 will continue in the direction of position B2. A route-of-travel prediction can then be made based on this assumption. Furthermore, this most likely result, position B2, is assumed to be the subsequent position of the vehicle 100, with the current position C2 as the incoming direction. Based on a frequency calculation for position B2 using C2 as an input value, the ensuing direction can then be predicted, and so on; see also **Figure 2E****.**

In the prediction, the position is estimated by taking the most likely outgoing direction (the column with the highest value for the current row) for the current position and the incoming direction. In certain embodiments, the statistical algorithm can also have a forgetting factor to enable new roads to be learned and irrelevant roads to be forgotten. The statistics can also be made dependent upon other parameters, such as vehicle weight; a statistical table is then created for each selected weight range, e.g. 0 - 10 tonnes, 10 - 20 tonnes, 20 - 30 tonnes and 30 - 40 tonnes. For example, it may be that the vehicle 100 usually makes a choice of a given road when it is fully laden (to transport and unload its cargo) and another choice of road when it is empty (and driving to pick up more cargo).

Additional parameters can also be stored and used in a selection, such as the vehicle type. It is conceivable that different types of vehicles in an open-pit mine would, for example, have different functions and consequently move based on individual driving schedules.

Parameters having to do with the underlying surface can also be used as a selection in corresponding fashion. It may be found that vehicles often choose a short but steep road when the underlying surface is dry, but opt for a long and flat road when the roadbed is slippery or soft. The condition of the roadbed can be estimated by means of, for example, a rain sensor and/or thermometer in the vehicle 100.

Each entry made in the table can also include a time marking, which makes it possible to dump values that are older than a given configurable limit age and can consequently be suspected of being out-of-date.

**Figure 2C** shows examples of topographic differences between various positions D2, C2, B2 in the terrain where the vehicle 100 is located.

**Figure 2D** shows examples of data that are stored in association with respective positions D2, C2 and B2. In this example, elevation, slope and rolling resistance have been stored, but this is just one example. According to certain embodiments, the location-dependent data could alternatively be associated with the aforementioned respective driving direction and/or the time, season, weather, temperature or similar data. Furthermore, said data can also be stored together with, or in association with, the vehicle weight, vehicle type, vehicle identification, vehicle driver, vehicle owner or any other similar vehicle-related parameter.

In certain embodiments, elevation and/or slope can be low-pass filtered against old values in the working map 200. In this way the effects of noise can be reduced, and the vehicle 100 can learn that the terrain is changing over time, to the extent that this is occurring in the relevant area. Gathered and stored directional statistics can then be used to predict which road the vehicle 100 will take next time.

**Figure 2E** illustrates how the predicted route of travel for the vehicle across the working map 200 can look in an example.

Once a database has been built up as shown in Figure 2B for a plurality of positions on the working map 200, it can be used to predict a route of travel for the vehicle 100. The direction of travel and most likely route of travel, in this example B2, can be predicted from the current position C2 and the previous position D2, based on a frequency analysis. A new map position B2 is reached by following this new calculated direction, and the next most likely direction for said new position B2 can then be calculated using the direction from C2 as an input value, and so on. In this way it is possible, using the current vehicle position C2 and its earlier known position D2 as input values, to predict not only the subsequent position B2 but also which future route of travel through a plurality of positions, here B2, B3, A4, is most likely for the vehicle 100 to take on the two-dimensional working map 200, e.g. 500 meters ahead.

Once the future route of travel has been predicted for the vehicle 100, the stored location-dependent parameter comprising, for example, topographic data such as elevation or slope data for corresponding positions B2, B3, A4, can be used to predict the upcoming road slope.

In certain embodiments, the vehicle 100 can continue to continuously update the database the entire time while driving, even as the future road and slope are being predicted. This makes it possible to update the database with current data the entire time.

Once the vehicle 100 reaches the edge of the current working map 200, the next subsequent working map in the predicted direction of travel can be read in, e.g. from a database, if such data are available, i.e. if the vehicle 100 has been there previously or if data from other vehicles are used.

Furthermore, when the vehicle 100 approaches the edge of the current working map 200, updated data in relevant sections can be saved in a database. Relevant sections can comprise positions with slope changes or elevation changes that exceed a given calibratable threshold value. The directional statistics for these relevant sections are also saved so as to enable prediction the next time the vehicle 100 returns there. Statistics on how other location-dependent operating parameters affect the choice of road/direction, such as temperature and thus any ice formation or precipitation and the potentially more slippery road that may result from this can also optionally be saved. These saved data can then, for example, be sent to a central database and/or server so as to subsequently be sent out to other vehicles.

Furthermore, by predicting elevation and/or slope, the curvature of the route of travel forward can be included, according to certain embodiments. The curvature of the road can be used to estimate the rolling resistance; if the road curves, dramatically the rolling resistance will increase, and a lower gear may need to be used if the predicated rolling resistance exceeds a given limit value.

According to certain embodiments, data from vehicles other than the host vehicle 100 can be used in different ways and to different extents. These alternatives can also be combined and weighted in different ways; here are some examples of this: 1) The vehicle 100 uses only data that the vehicle itself has previously entered in the database. 2) The vehicle 100 uses data from itself according to alternative 1 plus data obtained from a database or server to which vehicles made by the same maker have sent data. 3) The vehicle uses data from itself according to alternative 1 and from other vehicles having the same owner, e.g. a hauling company, mining company or the like. 4) The vehicle uses more parameters than just direction to predict the road selection. In certain embodiments it is also possible for a user to configure this in the vehicle 100, and to turn this prediction function off or limit the selection if it is perceived to be erroneous.

According to certain embodiments, when predicting the most likely route of travel, a potential known final destination, which can be obtained from the vehicle navigation equipment, is used to improve the estimate of the most likely route of travel. For example, a check can thus be made as to whether the predicted route of travel is consistent with the final destination, and greater confidence in the predicted route of travel can be generated if they are consistent.

Furthermore, according to certain embodiments, a follow-up can be performed as to whether the current vehicle position is consistent with the predicted route of travel. If the vehicle 100 proves to be outside of previously predicted route of travel, this prediction can be discarded as erroneous, and a new prediction can be made using the current position of the vehicle as a starting point. One thus avoids, or reduces the risk of, a decision concerning, for example, shifting gears in the vehicle on the basis of an erroneous predicted route of travel.

Reliable and current information is obtained by letting the vehicle 100 itself build a map of the terrain, including for landscape types where information or even roads are lacking. The map 200 adapts itself automatically to changes in the landscape resulting from mining operations, excavation, blasting, construction, materiel storage, logging, bridge-building, land-raising or the like. The predicated road selection and road slope can, in certain embodiments, be predicted with particular consideration given to various parameters, such as vehicle type, vehicle weight etc, which further enhances the reliability.

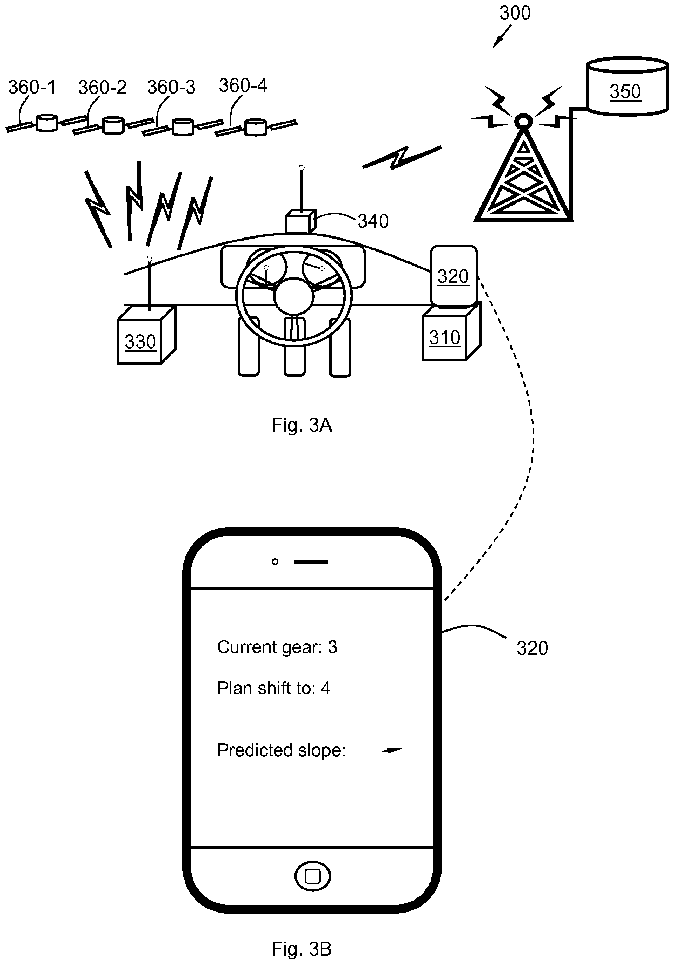

**Figure 3A** shows an example of a vehicle interior in the vehicle 100, which comprises a system **300** arranged so as to build a database **350** in order to enable prediction of a route of travel for a vehicle 100. Said database 350 can be disposed in the vehicle 100 or outside the vehicle 100 according to different embodiments.

The vehicle 100 comprises a calculating unit **310,** arranged so as to build the database 350, and so as to predict a route of travel for the vehicle 100. In one embodiment, the vehicle 100 comprises a display screen **320** that can, for example, display the currently selected gear, gear options and the estimated future slope of the route of travel, as illustrated in **Figure 3B****.**

The vehicle 100 comprises a positioning unit **330.** Said positioning unit 330 can be arranged so as to determine the geographic position of the vehicle based on a system for satellite navigation such as, e.g. Navigation Signal Timing and Ranging (Navstar), Global Positioning System (GPS), Differential GPS (DGPS), Galileo, GLONASS or the like.

The positioning unit 330 in the vehicle 100 determines the geographic position of the vehicle. This position determination can be made continuously at a given predetermined or configurable time interval, according to different embodiments. Furthermore, the driver himself, or a passenger, can alternatively record or mark his position, e.g. via a keyboard, a touchscreen or a similar input device.

Positioning based on satellite navigation is based on ranging via triangulation from a number of satellites **360-1, 360-2, 360-3, 360-4.** The satellites 360-1, 360-2, 360-3, 360-4 continuously transmit date and time information (e.g. in coded form), identity (which satellite 360-1, 360-2, 360-3, 360-4 is transmitting), status and information as to where the satellite 360-1, 360-2, 360-3, 360-4 is located at any given time. The GPS satellites 360-1, 360-2, 360-3, 360-4 transmit information coded using code division, e.g. based on Code Division Multiple Access (CDMA). This makes it possible to distinguish information from each individual satellite 360-1, 360-2, 360-3, 360-4 from the information from the others, based on a unique code for each respective satellite 360-1, 360-2, 360-3, 360-4. This transmitted information can then be received by a suitably adapted GPS receiver, such as the positioning unit 330.

According to certain embodiments, ranging can occur in that the positioning unit 330 measures the differences in the time it takes for each respective satellite signal to receive the positioning unit 330. Because these signals travel at the speed of light, it is possible to calculate how far it is to each respective satellite 360-1, 360-2, 360-3, 360-4. Because the positions of the satellites are known, since they are continuously monitored by roughly 15-30 ground stations located essentially along and in proximity to the equator of the earth, it is then possible to calculate, by triangulation, where one is located in latitude and longitude once the distances to at least three satellites 360-1, 360-2, 360-3, 360-4 have been determined. According to certain embodiments, signals from at least four satellites 360-1, 360-2, 360-3, 360-4 can be used to determine altitude.

Furthermore, the vehicle 100 can comprise a communication device **340** arranged for wireless communication. According to various embodiments, such wireless communication can be based on, for example, any of the following technologies: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE), LTE-Advanced; Wireless Fidelity (Wi-Fi), as defined by the Institute of Electrical and Electronics Engineers (IEEE) standards 802.11 a, ac, b, g and/or n, Internet Protocol (IP), Bluetooth and/or Near Field Communication, (NFC), or a similar communication technology. This enables the transmission of gathered location-dependent data, such as position, elevation data, slope data etc to the database 350 while traveling, and the retrieval, from the database 350, of data for predicting the route of travel, potentially via a base station or the like. As noted above, this applies when the database is disposed outside the vehicle 100. In certain embodiment, the database 350 may be disposed in the vehicle 100.

Furthermore, the vehicle 100 can comprise one or more sensors for sensing topographic data such as elevation and/or slope. The instantaneous elevation of the vehicle can, as noted above, be read by means of the positioning unit 330. However, the elevation of the vehicle can also, or alternatively, be detected by means of a pressure sensor, barometer, altimeter or other type of elevation meter. Alternatively, the elevation of the vehicle can be determined by combining the values read from a plurality of such topological instruments, or in that the driver makes measurements or estimates of the elevation and enters them via an input device.

In certain embodiments, the slope at the position can also, or alternatively, be determined by means of a sensor. For example, the slope at the position can be estimated by means of an accelerometer, leveling instrument or other slope sensor, e.g. based on a spirit level or plumb line.

In certain embodiments, rolling resistance can be measured and stored by detectors arranged for this purpose. The type of underlying surface can thus be detected, such as gravel, soft clay or asphalt.

In one embodiment, the calculating unit 310 can communicate with the positioning unit 330 in the vehicle 100, and with various sensors and detectors in the vehicle 100, e.g. via the vehicle communication bus, which can consist of one or more of a cable, a database, such as a CAN bus (Controller Area Network bus), a MOST bus (Media Oriented Systems Transport), or any other bus configuration.

According to certain embodiments, the calculating unit 310 can also be arranged for wireless communication over a wireless interface, such as any of the wireless interfaces enumerated above.

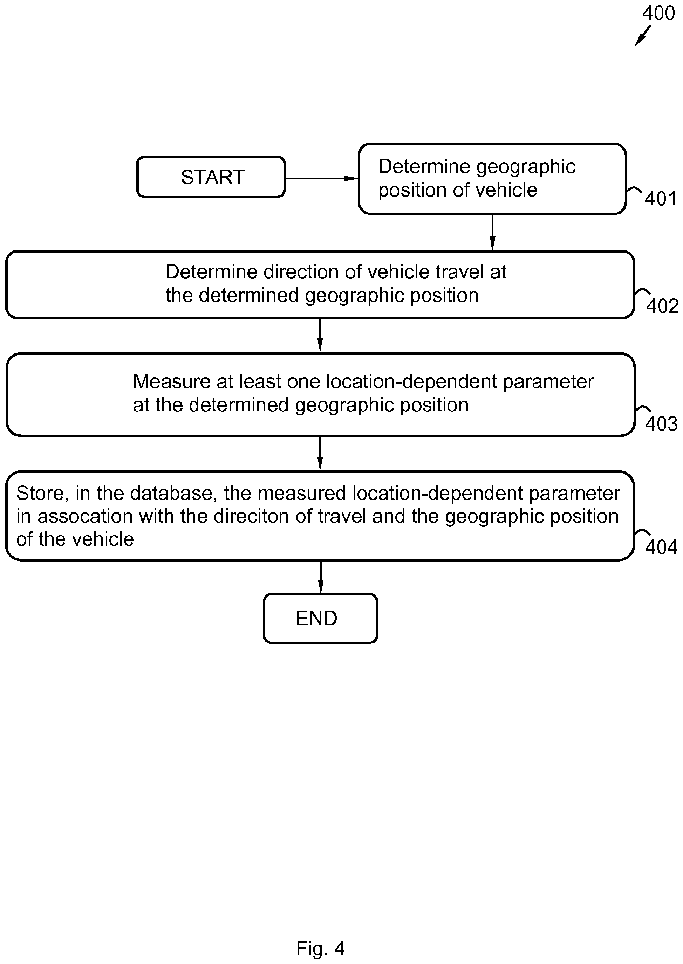

**Figure 4** illustrates an exemplary embodiment of the invention. The flow diagram in Figure 4 clarifies a method **400** for building a database 350 to enable prediction of a route of travel for a vehicle 100. The database 350 contains a representation of a landscape. In certain embodiments said representation of the landscape in the database 350 can be matrix-based, wherein each matrix element corresponds to a two-dimensional section of the landscape.

During the building of the database 350, the method 400 can comprise a number of steps **401-404.** Furthermore, the described steps 401-404 can be performed in a chronological order other than that indicated by their numerical order. Certain of the described steps 401-404 can also be performed in parallel with one another. The method 400 comprises the following steps:

### Step 401

The vehicle position is determined by means of a positioning unit 330, e.g. by means of satellite positioning.

Such satellite-based positioning can comprise or be based on, e.g. GPS, Navstar, DGPS, Galileo, GLONASS or the like. However, other forms of positioning may be included according to certain embodiments, e.g. the driver himself can indicate his current position, e.g. on a touchscreen, a keyboard or other input device for the positioning unit 330.

In certain embodiments in which the representation of the landscape in the database 350 is matrix-based, the section in which the vehicle 100 is located can be determined.

### Step 402

The direction of vehicle travel at the determined 401 geographic position is determined.

According to the invention, the direction of vehicle travel is determined by determining the direction from which the vehicle 100 arrived at the geographic position and the direction in which the vehicle 100 departed from the geographic position.

### Step 403

At least one location-dependent parameter is measured at the determined 401 geographic position.

Such location-dependent parameters can comprise, for example, an elevation-related parameter that can be measured by means of, e.g. GSM, a pressure sensor, barometer, altimeter or the like. Furthermore, the elevation measurement can be made via a combination of measurements by a plurality of different sensors, e.g. any of the aforementioned. Improved precision in the elevation measurement can be obtained thereby in certain embodiments.

The location-dependent parameter can comprise, e.g. the elevation, slope, rolling resistance of the underlying surface, planetary curvature, average travel velocity, time, date weather, temperature, velocity, engaged gear, vehicle type and/or vehicle weight.

### Step 404

The measured 403 location-dependent parameter is stored, in the database 350, in association with the determined 402 direction of travel and the determined 401 geographic position of the vehicle.

The storage of the measured 403 location-dependent parameter can also include the creation of various statistical tables for various vehicle weight ranges, such as 0 - 10 tonnes, 10 - 20 tonnes, 20 - 30 tonnes and 30 - 40 tonnes, and storage occurs in the statistical table that corresponds to the vehicle weight range for the vehicle.

According to the invention, the storage also comprises a count kept by a counter for the direction of vehicle travel at the determined 401 geographic position of the vehicle 100.

Such a counter for the direction of vehicle travel can be incremented to a ceiling value; and when the ceiling value for a given direction of travel is reached, the counters for the other directions of vehicle travel at the determined 401 geographic position can be decremented.

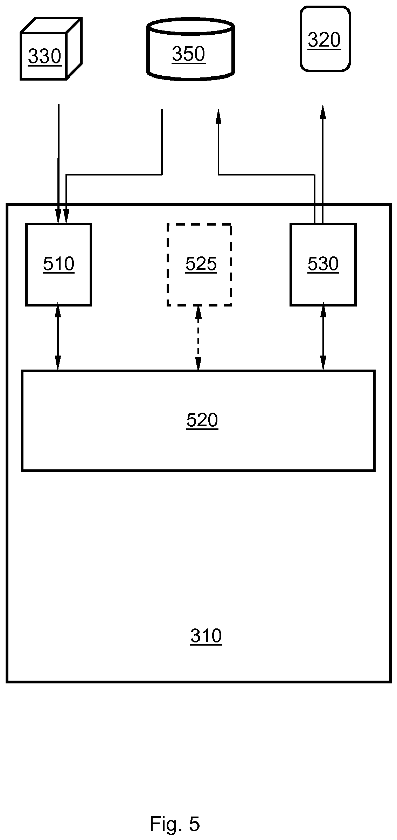

**Figure 5** illustrates an embodiment of a calculating unit 310 for building a database 350 to enable prediction of a route of travel for a vehicle 100.

Said calculating unit 310 is configured so as to perform at least certain of the aforedescribed method steps 401-404 comprised in the method 400 for building a database 350 to enable prediction of a route of travel for a vehicle 100. In certain embodiments the calculating unit 310 can also be configured so as to predict a route of travel for a vehicle 100.

In order to be able to build the database 350 in a proper manner and thereby enable prediction of a route of travel, the calculating unit 310 comprises a number of components, which will be described in detail in the text below. Certain of the described secondary components occur in some, but not necessarily all, embodiments. Additional electronics may also be present in the calculating unit 310 that are not necessary to understand the function of the calculating unit 310 according to the invention, and have consequently been omitted in Figure 5, and in this description.

The calculating unit 310 comprises a processor circuit **520,** which is arranged so as to determine the geographic position of the vehicle via a positioning unit 330. The processor circuit 520 is also arranged so as to determine the direction of vehicle travel at the determined geographic position. The processor circuit 520 is also arranged so as to measure at least one location-dependent parameter at the determined geographic position by means of a sensor 330. The processor circuit 520 is further arranged so as to store, in the database 350, the measured location-dependent parameter in association with the determined direction of travel and the determined geographic position of the vehicle.

In certain embodiments, the processor circuit 520 can also be arranged so as to determine the geographic position of the vehicle via a positioning unit 330. Furthermore, the processor circuit 520 is arranged so as to determine the direction of vehicle travel at the determined geographic position. The processor circuit 520 can also be arranged so as to determine a stored position in a database 350 that agrees with the determined geographic position of the vehicle. The processor circuit 520 can also be arranged so as to predict a route of travel based on the estimated likelihood of stored directions of travel at the determined position. The process circuit 520 can also be arranged so as to extract information containing a stored location-dependent parameter associated with the predicted route of travel.

According to the invention, the processor circuit 520 is arranged so as to increment a counter for the direction of vehicle travel at the determined geographic position. Furthermore, the processor circuit 520 can also increment the counter for the direction of vehicle travel up to a ceiling value; and when the ceiling value for a given direction of travel is reached, the processor circuit 520 can decrement the counters for the other directions of vehicle travel at the determined geographic position.

The processor circuit 520 can consist, for example, of one or more of a Central Processing Unit (CPU), microprocessor or other logic designed so as to interpret and carry out instructions and/or to read and write data. The processor circuit 520 can manage data for the inflow, outflow or data-processing of data that also includes the buffering of data, control functions and the like.

The calculating unit 310 can also comprise a signal receiver **510** arranged so as to receive a position determination for the vehicle 100 from a positioning unit 330 contained in the vehicle 100, according to certain embodiments. Furthermore, the signal receiver 510 can also be arranged so as to receive the values from other sensors or meters in or associated with the vehicle 100, such as an elevation meter, speedometer, thermometer, clock etc. Such measurement data can pertain to, for example, the elevation, slope, rolling resistance of the underlying surface, planetary curvature, average velocity, time, date, weather, temperature, velocity, engaged gear, vehicle type and/or vehicle weight. Furthermore, the signal receiver 510 can also be arranged so as to receive data from the database 350, according to certain embodiments.

According to certain embodiments, the calculating unit 310 can also comprise a memory **525** arranged so as to store cartographic data, e.g. in the form of a working map 200. In certain embodiments, the working map 200 can be matrix-based, wherein each matrix element corresponds to a two-dimensional section of the landscape. Furthermore, the memory 525 can also be arranged so as to store measured location-related data associated with a position.

The memory unit 525 can consist, for example, of a memory card, flash memory, USB memory, hard disk or other similar non-volatile data-storage unit of a permanent nature, such as any of the group comprising ROM (Read-Only Memory), PROM (Programmable Read-Only Memory), EPROM (Erasable PROM), Flash memory, EEPROM (Electrically Erasable PROM), etc in various embodiments.

According to certain embodiments, the calculating unit 310 can also comprise a transmitting circuit **530** arranged so as to send measurement data or detected location-related data to the database 350 over a wireless or wire-bound interface. In certain embodiments, the transmitting circuit 530 can be contained in the calculating unit 310, so that they form a single entity. Furthermore, the calculating unit 310 can be arranged so as to send data to a display screen 320 in certain embodiment.

The invention further comprises a computer program for building a database 350 to enable prediction of a route of travel for a vehicle 100 by performing a method 400 according to at least one of the aforedescribed steps 401-404 when the computer program is executed in a processor circuit 520 in a calculating unit 310.

The method 400 according to the steps 401-404 for building the database 350 to enable prediction of a route of travel can be implemented via one or more processor circuits 520 in the calculating unit 310, together with computer program code in a non-volatile data carrier in order to perform any, some, certain or all of the method steps 401-404 described above. A computer program can thus contain instructions for performing the steps 401-404 when the computer program is loaded into the processor circuit 520 in the calculating unit 310.

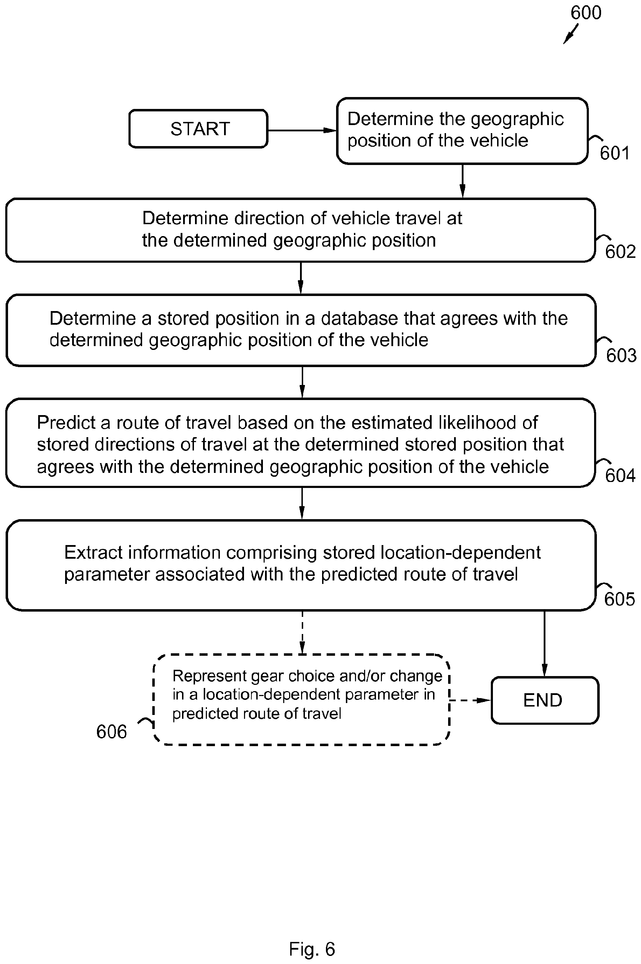

**Figure 6** illustrates an example not forming part of the claimed invention. The flow diagram in Figure 6 clarifies a method **600** for predicting a route of travel for a vehicle 100.

To be able to predict the route of travel successfully, the method 600 can comprise a number of steps **601-606.** However, it should be noted that certain of the steps described here are included only in certain alternative embodiments of the invention, such as step 606. Furthermore, the described steps 601-606 can be performed in a chronological order other than that indicated by their numerical order. Certain of the described steps 601-606 can also be performed in parallel with one another. The method 600 comprises the following steps:

### Step 601

The geographic position of the vehicle is determined by means of a positioning unit 330.

Such satellite-based positioning can comprise or be based on, e.g. GPS, Navstar, DGPS, Galileo, GLONASS or the like. However, other forms of positioning can be comprised according to certain embodiments; for example, the driver himself can determine and mark his current position, e.g. on a display screen, a keyboard or other input device for the positioning unit 330.

In certain embodiments in which the representation of the landscape in the database 350 is matrix-based, the section in which the vehicle 100 is located can be determined.

### Step 602

The direction of vehicle travel at the determined geographic position is determined.

This determination can include a determination of the direction from which, or the position from which, the vehicle 100 arrived at its current position.

### Step 603

A stored position in a database 350 is determined that agrees with the determined 610 geographic position of the vehicle.

According to certain embodiments, the representation of the landscape in the database 350 can be matrix-based, wherein a matrix element corresponds to a two-dimensional section of the landscape.

According to certain embodiments, the determination of a stored position in a database 350 can include a determination of the matrix element in the database 350 to which the geographic position of the vehicle corresponds.

### Step 604

The route of travel for the vehicle 100 is predicted, based on the estimated likelihood of the stored directions of travel at the determined 603 position.

According to certain embodiments, the prediction of a route of travel can include a determination of the most likely ensuing direction of travel to an ensuing position, using the current position as the incoming direction to the ensuing position and the next ensuing direction of travel and position.

Furthermore, the prediction of a route of travel for the vehicle 100 can be used to select a gear in a transmission in the vehicle, and/or as a basis for deciding to control the engagement of another function in the vehicle 100.

### Step 605

Information containing the stored location-dependent parameter associated with the predicted 604 route of travel is extracted.

The extracted information can comprise a stored location-dependent parameter such as an elevation-related parameter such as the elevation and/or slope, a stored estimated rolling resistance, rolling resistance of the underlying surface, planetary curvature, average travel velocity, time, date, weather, temperature, vehicle type and/or vehicle weight associated with the predicted 604 route of travel.

In certain embodiments, the extraction of information can be done from a statistical table for various vehicle weight ranges, e.g. 0 - 10 tonnes, 10 - 20 tonnes, 20 - 30 tonnes and 30 - 40 tonnes that correspond to the vehicle weight range for the vehicle.

### Step 606

This method step is included in some, but not all embodiments. A gear choice and/or change in a location-dependent parameter as a result of the predicted 604 route of travel can be represented.

For example, this gear choice, change in the location-dependent parameter such as the elevation, road slope or the like, and/or the predicted 604 route of travel can be fully or partly represented on a display screen 320 or the like. The representation can also, or alternatively, be achieved by means of audio signals, voice messages, diodes, tactile signals that notify the driver, or the like.

The invention further comprises a computer program for predicting a route of travel for a vehicle 100 by performing a method 600 according to at least one of the aforedescribed steps 601-606 when the computer program is executed in a processor circuit 520 in a calculating unit 310.

The method 600 according to the steps 601-606 for predicting a route of travel for a vehicle 100 can be implemented via one or more processor circuits 520 in the calculating unit 310, together with computer program code in a non-volatile data carrier, in order to perform any, some, certain or all of the method steps 601-606 described above. A computer program can thus contain instructions for performing the steps 601-606 when the computer program is loaded into the processor circuit 520 in the calculating unit 310.

Certain embodiments further comprise a system **300** for building a database 350 for enabling prediction of a route of travel for a vehicle 100. Said system 300 comprises a database 350, a positioning unit 330 in the vehicle 100, a sensor 330 for measuring at least one location-dependent parameter, and a calculating unit 310.

Some embodiments of the invention also comprise a vehicle 100 that contains a system 500 for building a database 350 to enable prediction of a route of travel for a vehicle 100.

## Claims

1. A method (400) for building a database (350) to enable prediction of a route of travel for a vehicle (100), wherein the method (400) comprises:
determination (401) of the geographic position of the vehicle (100) by means of a positioning unit (330);
determination (402) of the direction of vehicle travel at the determined (401) geographic position;
measurement (403) of topographic data at the determined (401) geographic position; and
storage (404), in the database (350), of the measured (403) topographic data in association with the determined (402) direction of travel and the determined (401) geographic position of the vehicle (100); **characterized in that** the method further comprises: incrementing a counter for the determined (402) direction of vehicle travel at the determined (401) geographic position, wherein the determination (402) of the direction of vehicle travel is made by determining the direction from which the vehicle (100) arrived at the geographic position and the direction in which the vehicle (100) departed from the geographic position.

2. The method (400) according to claim 1, wherein the determination (402) of the direction of vehicle travel is made by determining the geographic position from which the vehicle (100) arrived at the geographic position and the geographic position toward which the vehicle (100) departed from the geographic position.

3. The method (400) according to any of claims 1-2, wherein the topographic data comprises the elevation or slope, and wherein at least one additional parameter is measured (403) at the determined geographic position, such as average travel velocity, time, date, weather, temperature, vehicle type and/or vehicle weight.

4. The method (400) according to any of claims 1-3, wherein the representation of the landscape in the database (350) is matrix-based, and wherein each matrix element corresponds to a two-dimensional section of the landscape, and wherein the determination (401) of the geographic position of the vehicle (100) includes a determination of the section in which the vehicle (100) is located.

5. The method (400) according to any of claims 1-4, further comprising storage of a measured location-dependent parameter including various statistical tables for various vehicle weight ranges, wherein the storage occurs in the statistical table that corresponds to the vehicle weight range for the vehicle.

6. The method (400) according to claim 1, wherein the counter for the direction of vehicle travel is incremented up to a ceiling value; and when the ceiling value for a given direction of travel is reached, the counters for the other directions of travel at the determined (401) geographic position are decremented.

7. A calculating unit (310) for building a database (350) to enable prediction of a route of travel for a vehicle (100), wherein the calculating unit (310) comprises:
a processor circuit (520) arranged so as to determine the geographic position of the vehicle (100) via a positioning unit (330); and also arranged so as to determine the direction of vehicle travel at the determined geographic position; and also arranged so as to measure topographic data at the determined geographic position via a sensor (330); and further arranged so as to store, in the database (350), the measured topographic data in association with the determined direction of travel and the determined geographic position of the vehicle (100); **characterized in that** the processor circuit (520) is further arrange so as to increment a counter for the determined direction of vehicle travel at the determined geographic position, and arranged to perform the determination of the direction of vehicle travel by determining the direction from which the vehicle (100) arrived at the geographic position and the direction in which the vehicle (100) departed from the geographic position.

8. A computer program for building a database (350) to enable prediction of a route of travel for a vehicle (100), the computer program comprising instructions for performing a method (400) according to any of claims 1-6 when the computer program is executed in a processor circuit (520) in a calculating unit (310) according to claim 7.

## Patentansprüche

1. Verfahren (400) zum Aufbau einer Datenbank (350), um eine Vorhersage einer Reiseroute für ein Fahrzeug (100) zu ermöglichen, wobei das Verfahren (400) umfasst:
Ermitteln (401) der geografischen Position des Fahrzeugs (100) mittels einer Positionsbestimmungseinheit (330),
Ermitteln (402) der Richtung einer Fahrzeugbewegung an der ermittelten (401) geografischen Position,
Messen (403) topografischer Daten an der ermittelten (401) geografischen Position, und
Speichern (404) der gemessenen (403) topografischen Daten in Verbindung mit der ermittelten (402) Bewegungsrichtung und der ermittelten (401) geografischen Position des Fahrzeugs (100) in der Datenbank (350), **dadurch gekennzeichnet, dass** das Verfahren ferner umfasst:
Inkrementieren eines Zählers für die ermittelte (402) Richtung einer Fahrzeugbewegung an der ermittelten (401) geografischen Position, wobei das Ermitteln (402) der Richtung einer Fahrzeugbewegung erfolgt durch Ermitteln der Richtung, aus der das Fahrzeug (100) die geografische Position erreicht hat und der Richtung, in die das Fahrzeug (100) die geografische Position verlassen hat.

2. Verfahren (400) nach Anspruch 1, bei dem das Ermitteln (402) der Richtung einer Fahrzeugbewegung erfolgt durch Ermitteln der geografischen Position, aus der das Fahrzeug (100) die geografische Position erreicht hat, und der geografischen Position, in Richtung derer das Fahrzeug (100) die geografische Position verlassen hat.

3. Verfahren (400) nach einem der Ansprüche 1 bis 2, bei dem die topografischen Daten die Höhe oder Neigung umfassen, und bei dem zumindest ein zusätzlicher Parameter an der ermittelten geografischen Position gemessen wird (403), wie beispielsweise mittlere Reisegeschwindigkeit, Zeit, Datum, Wetter, Temperatur, Fahrzeugart und/oder Fahrzeuggewicht.

4. Verfahren (400) nach einem der Ansprüche 1 bis 3, bei dem die Darstellung der Landschaft in der Datenbank (350) matrixbasiert ist, wobei jedes Matrixelement einem zweidimensionalen Abschnitt der Landschaft entspricht, und wobei das Ermitteln (401) der geografischen Position des Fahrzeugs (100) ein Ermitteln des Abschnitts beinhaltet, in dem sich das Fahrzeug (100) befindet.

5. Verfahren (400) nach einem der Ansprüche 1 bis 4, ferner umfassend ein Speichern eines gemessenen ortsabhängigen Parameters einschließlich verschiedener statistischer Tabellen für verschiedene Fahrzeuggewichtsbereiche, wobei das Speichern in der statistischen Tabelle erfolgt, die dem Fahrzeuggewichtsbereich für das Fahrzeug entspricht.

6. Verfahren (400) nach Anspruch 1, bei dem der Zähler für die Fahrzeugbewegungsrichtung bis zu einem oberen Grenzwert inkrementiert wird, und wenn der obere Grenzwert für eine gegebene Bewegungsrichtung erreicht wird, die Zähler für die anderen Bewegungsrichtungen an der ermittelten (401) geografischen Position dekrementiert werden.

7. Berechnungseinheit (310) zum Aufbau einer Datenbank (350), um eine Vorhersage einer Reiseroute für ein Fahrzeug (100) zu ermöglichen, wobei die Berechnungseinheit (310) aufweist:
eine Prozessorschaltung (520), die angeordnet ist zum Ermitteln der geografischen Position des Fahrzeugs (100) mittels einer Positionsbestimmungseinheit (330) und ferner angeordnet ist zum Ermitteln der Richtung einer Fahrzeugbewegung an der ermittelten geografischen Position und ferner dazu angeordnet ist, topografische Daten an der ermittelten geografischen Position mittels eines Sensors (330) zu messen, und darüber hinaus angeordnet ist zum Speichern der gemessenen topografischen Daten in Verbindung mit der ermittelten Bewegungsrichtung und der ermittelten geografischen Position des Fahrzeugs (100) in der Datenbank (350), **dadurch gekennzeichnet, dass** die Prozessorschaltung (520) ferner dazu angeordnet ist, einen Zähler für die ermittelte Fahrzeugbewegungsrichtung an der ermittelten geografischen Position zu inkrementieren, und dazu angeordnet ist, die Ermittlung der Fahrzeugbewegungsrichtung durch Ermitteln der Richtung, aus der das Fahrzeug (100) die geografische Position erreicht hat, und der Richtung auszuführen, in die das Fahrzeug (100) die geografische Stelle verlassen hat.

8. Computerprogramm zum Aufbau einer Datenbank (350), um eine Vorhersage einer Reiseroute für ein Fahrzeug (100) zu ermöglichen, wobei das Computerprogramm Anweisungen umfasst zum Ausführen eines Verfahrens (400) nach einem der Ansprüche 1 bis 6, wenn das Computerprogramm in einer Prozessorschaltung (520) in einer Berechnungseinheit (310) nach Anspruch 7 ausgeführt wird.

## Revendications

1. Procédé (400) pour la construction d'une base de données (350) afin de permettre la prédiction d'un itinéraire pour un véhicule (100), dans lequel le procédé (400) comprend :
la détermination (401) de la position géographique du véhicule (100) au moyen d'une unité de positionnement (330) ;
la détermination (402) de la direction de déplacement du véhicule à la position géographique déterminée (401) ;
la mesure (403) des données topographiques à la position géographique déterminée (401) ; et
un stockage (404), dans la base de données (350), des données topographiques mesurées (403) en association avec la direction de déplacement déterminée (402) et la position géographique déterminée (401) du véhicule (100) ; **caractérisé en ce que** le procédé comprend en outre : l'incrémentation d'un compteur pour la direction de déplacement du véhicule déterminée (402) à la position géographique déterminée (401), dans laquelle la détermination (402) de la direction de déplacement du véhicule est effectuée par la détermination de la direction de laquelle le véhicule (100) est arrivé à la position géographique et de la direction dans laquelle le véhicule (100) est parti à partir de la position géographique.

2. Procédé (400) selon la revendication 1, dans lequel la détermination (402) de la direction du déplacement du véhicule est effectuée par la détermination de la position géographique à partir de laquelle le véhicule (100) est arrivé à la position géographique et la position géographique vers laquelle le véhicule (100) est parti à partir de la position géographique.

3. Procédé (400) selon l'une quelconque des revendications 1-2, dans lequel les données topographiques comprennent l'élévation ou la pente, et dans lequel au moins un paramètre supplémentaire est mesuré (403) à la position géographique déterminée, comme la vitesse moyenne de déplacement, l'heure, la date, le temps, la température, le type de véhicule et/ ou le poids du véhicule.

4. Procédé (400) selon l'une quelconque des revendications 1-3, dans lequel la représentation du paysage dans la base de données (350) est sur base d'une matrice, et dans lequel chaque élément de matrice correspond à une section bidimensionnelle du paysage, et dans lequel la détermination (401) de la position géographique du véhicule (100) comprend une détermination de la section dans laquelle le véhicule (100) est situé.

5. Procédé (400) selon l'une quelconque des revendications 1-4, comprenant en outre le stockage d'un paramètre dépendant de l'emplacement mesuré comprenant diverses tables statistiques pour diverses plages de poids du véhicule, dans lequel le stockage se produit dans la table statistique qui correspond à la plage de poids du véhicule pour le véhicule.

6. Procédé (400) selon la revendication 1, dans lequel le compteur pour la direction de déplacement du véhicule est incrémenté jusqu'à une valeur plafond ; et lorsque la valeur plafond pour une direction de déplacement donnée est atteinte, les compteurs pour les autres directions de déplacement à la position géographique déterminée (401) sont décrémentés.

7. Unité de calcul (310) pour la construction d'une base de données (350) afin de permettre la prédiction d'un itinéraire pour un véhicule (100), dans lequel l'unité de calcul (310) comprend :
un circuit processeur (520) agencé pour déterminer la position géographique du véhicule (100) via une unité de positionnement (330) ; et également agencé de manière à déterminer la direction de déplacement du véhicule à la position géographique déterminée ; et également agencé de manière à mesurer des données topographiques à la position géographique déterminée via un capteur (330) ; et en outre agencé de manière à stocker, dans la base de données (350), les données topographiques mesurées en association avec la direction de déplacement déterminée et la position géographique déterminée du véhicule (100) ; **caractérisé en ce que** le circuit de processeur (520) est en outre agencé de manière à incrémenter un compteur pour la direction déterminée de déplacement du véhicule à la position géographique déterminée, et agencé pour effectuer la détermination de la direction de déplacement du véhicule par la détermination de la direction de laquelle le véhicule (100) est arrivé à la position géographique et la direction dans laquelle le véhicule (100) est parti de la position géographique.

8. Programme informatique pour la construction d'une base de données (350) afin de permettre la prédiction d'un itinéraire pour un véhicule (100), le programme informatique comprenant des instructions pour l'exécution d'un procédé (400) selon l'une quelconque des revendications 1-6 lorsque le programme informatique est exécuté dans un circuit de processeur (520) dans une unité de calcul (310) selon la revendication 7.
